# FASCICULE DE BREVET EUROPEEN

(11) **EP 3 395 086 B1**
(45) Date de publication et mention de la délivrance du brevet: **02.02.2022**
(21) Numéro de dépôt: 16840371.5
(22) Date de dépôt: 22.12.2016
(51) Int. Cl.: H04W 4/00

(54) **SYSTEME DE SUGGESTION, DE LANCEMENT ET DE TELECHARGEMENT AUTOMATIQUE OU SEMI-AUTOMATIQUE D'APPLICATIONS POUR OBJET MOBILE INTELLIGENT**
SYSTEM ZUM VORSCHLAGEN, STARTEN UND AUTOMATISCHEN ODER HALBAUTOMATISCHEN HERUNTERLADEN VON ANWENDUNGEN FÜR EIN INTELLIGENTES MOBILES OBJEKT
SYSTEM FOR SUGGESTING, LAUNCHING AND AUTOMATICALLY OR SEMI-AUTOMATICALLY DOWNLOADING APPLICATIONS FOR AN INTELLIGENT MOBILE OBJECT

(30) Priorité: 24.12.2015 FR 1563315
(43) Date de publication de la demande: 31.10.2018
(73) Titulaire: Worldline, 95870 Bezons (FR)
(72) Inventeur: LEFEBVRE, Guillaume, 62410 Meurchin (FR); KOZAKIEWICZ, Nicolas, 78140 Velizy (FR); RITAINE, François-Julien, 59239 Thumeries (FR)
(74) Mandataire: Debay, Damien
(86) Numéro de dépôt international: PCT/EP2016/082453
(87) Numéro de publication internationale: WO 2017/109115

(56) Documents cités:
- EP-A1- 2 755 118
- WO-A1-2015/181591
- WO-A2-2010/075174
- US-A1- 2011 307 354
- US-A1- 2012 021 770
- US-A1- 2012 135 723
- US-A1- 2012 309 354
- US-A1- 2012 316 955
- US-A1- 2012 323 717
- US-A1- 2013 124 619
- US-A1- 2014 194 146
- US-A1- 2015 261 972

## Description

### DOMAINE TECHNIQUE DE L'INVENTION

L'invention se rapporte au domaine des systèmes de téléchargements automatiques ou semi-automatiques d'applications, en particulier destinés à être utilisés sur un objet mobile intelligent (OMI) tels que : un téléphone, une tablette, un ordinateur portable, un ordinateur à porter, une montre connectée, un serveur, un objet connecté, etc.

L'invention propose une méthode depuis le créateur de l'application vers l'utilisateur final et un système, pour propager, distribuer et apporter les données pertinentes et/ou l'application n'importe où, au moment où c'est utile, quel que soit le moyen de communication, avec peu ou pas d'action(s) de la part de l'utilisateur final, d'une façon sécurisée, sans mettre en risque les informations privées de contexte d'un dispositif de réception OMI, et assurant un service temps réel à valeur ajoutée et sûr en confidentialité pour l'utilisateur final.

### ETAT DE LA TECHNIQUE ANTERIEURE

On peut constater que le nombre d'applications disponibles pour les objets mobiles intelligents tels que téléphone, tablette, ordinateur portable, ne fait qu'augmenter. Il devient donc difficile pour un utilisateur de trouver une application correspondant à ses besoins, en particulier lorsque ses besoins fluctuent en fonction du temps et de son environnement.

Le document US2011/0307354 divulgue un procédé de suggestion d'applications à des utilisateurs sur base de leur profil.

Le document EP2706730 divulgue un procédé de suggestion d'applications mis en œuvre par un terminal, dans lequel une structure de données comportant des identifiants permet à un serveur de sélectionner une application tierce à suggérer pour que l'utilisateur la télécharge sur son terminal. Ainsi ce type de procédé nécessite en permanence une connexion entre le terminal et le serveur. En outre, la suggestion est effectuée par le serveur qui envoie un lien vers le terminal et non l'application client située sur le terminal, ce qui peut poser des problèmes lorsque le serveur ne répond pas ou n'est pas accessible. Par ailleurs, il n'y a aucune information dans ce document concernant les raisons du choix de la suggestion de telle ou telle application et encore moins la prise en compte d'un contexte environnemental pour suggérer une application spécifique.

Le document US8904274 divulgue un procédé de suggestion de lancement d'applications tierces par une première application client. La suggestion est basée sur des informations fournies par l'utilisateur sur une seconde application client. En outre, la suggestion est dirigée vers les applications tierces préalablement installées sur le dispositif et accessibles à la première application client. Il n'y a pas de suggestion d'installation de nouvelles applications tierces.

Ainsi il existe un besoin d'un système comprenant une application client et une application serveur, suggérant, suivant les cas d'espèce, le lancement, ou l'installation puis le lancement, d'une application tierce en fonction de son environnement, ledit système restant opérationnel lorsque l'application serveur n'est pas disponible, ou pas accessible, et offrant une modularité dans son fonctionnement.

### EXPOSE DE L'INVENTION

La présente invention a donc pour objet de proposer un système de suggestion, de lancement et de téléchargement automatique ou semi-automatique d'applications pour objet mobile intelligent (OMI), permettant de palier au-moins une partie des inconvénients de l'art antérieur, en proposant un système qui détermine les besoins de l'utilisateur et lui propose une application en fonction d'un contexte environnemental.

**A** cet effet, l'invention concerne un système selon les revendications.

### BREVE DESCRIPTION DES FIGURES

D'autres caractéristiques, détails et avantages de l'invention ressortiront à la lecture de la description qui suit en référence aux figures annexées :

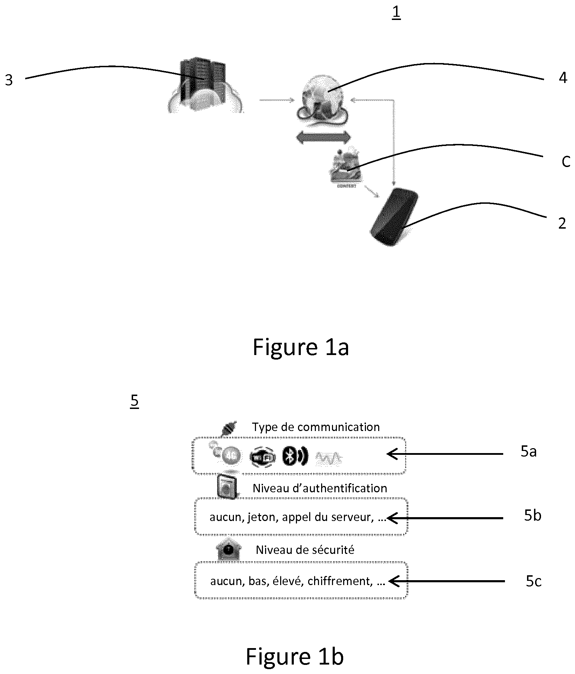

- la figure 1, représente le système selon l'invention dans un premier mode de fonctionnement lorsque l'application client ACOMI (2) peut communiquer directement avec l'application serveur AS (3) sur un serveur distant au moyen de différents modes de connexion,
- la figure 1b, représente un menu du système selon l'invention dans lequel sont présentés les différents modes de connexion au serveur distant,

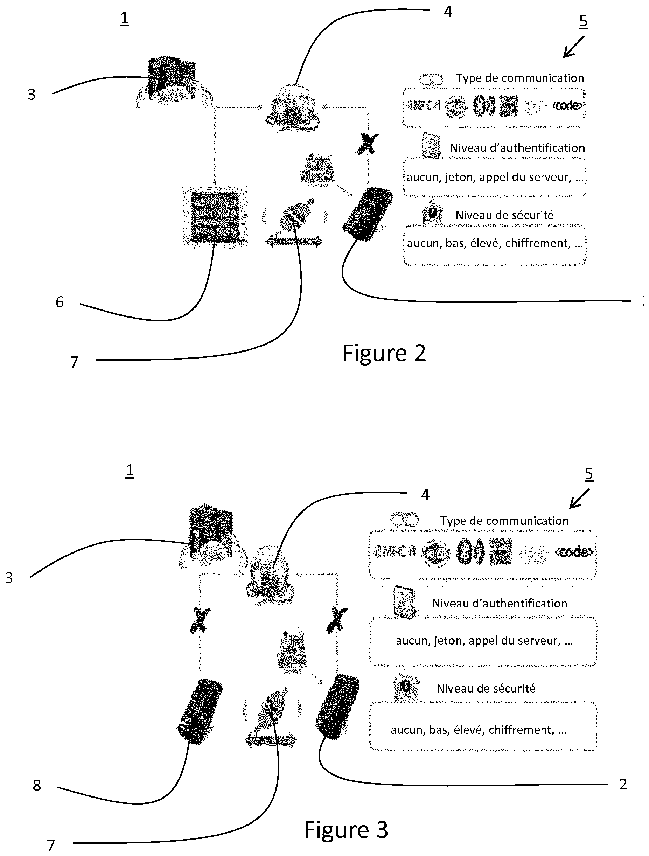

- la figure 2, représente le système selon l'invention dans un second mode de fonctionnement lorsque l'application client ACOMI (2) ne peut pas communiquer avec l'application serveur AS (3) sur un serveur distant, un appairage se mettant alors en place entre l'application client ACOMI (2) et une application serveur AS (3) sur un serveur local par différents moyens de connexion d'authentification et de sécurisation,
- la figure 3, représente le système selon l'invention dans un second mode de fonctionnement lorsque l'application client ACOMI (2) ne peut pas communiquer avec l'application serveur AS (3) sur un serveur distant, un appairage se mettant alors en place entre l'application client ACOMI (2) et une seconde application client ACOMI (2) sur un autre OMI par différents moyens de connexion d'authentification et de sécurisation afin d'établir une liaison de type Pair à Pair (P2P).

### DESCRIPTION DETAILLEE DE DIFFERENTS MODES DE REALISATION DE L'INVENTION

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

L'idée sous-jacente derrière la présente invention est d'obtenir « la bonne application au bon moment ».

La recherche, l'installation et le lancement d'une application sont traditionnellement considérés comme trois étapes très différentes, nécessitant à chaque étape, une action volontaire de la part de l'utilisateur.

Or, si les pré-requis sont remplis, un utilisateur ne devrait pas avoir à se soucier de ces différentes étapes. En particulier, l'utilisateur ne devrait pas s'inquiéter de trouver la bonne application, tout comme il peut ne pas être au courant qu'une application de ce type existe.

Pour ce faire, l'objet de la présente demande est un système (1) comprenant une application client ACOMI (2) destinée à être exécutée par un objet informatique communicant, mobile et intelligent (OICMI, dans la suite abrégé à OMI) tel qu'un téléphone, une tablette, un ordinateur portable, un serveur ou un objet connecté et une application serveur AS (3) destinée à être exécutée sur un serveur informatique ou un sur autre OICMI.

De préférence, le serveur informatique exécutant l'AS est un serveur connecté à internet (4) par différents moyens de communication tels que : Ethernet, GSM, Bluetooth, WIFI, radio.

Comme illustré sur la figure 1a, l'application client ACOMI (2) et l'application serveur AS (3) sont capables de communiquer entre elles : soit sur internet (4), soit au moyen de différents réseaux de communication tels que GSM, Bluetooth, WIFI, radio.

L'application client ACOMI (2) comporte donc un module de programme capable de rechercher le réseau de communication le plus approprié compte tenu de la localisation de l'application client, puis d'utiliser cette communication en mettant en œuvre le niveau de sécurisation choisi par l'utilisateur dans le menu (5) de l'application ACOMI, illustré par la figure 1b, ce qui lui permet de choisir pour chaque moyen de communication (5a), le niveau d'authentification (5b) et de sécurité adapté (5c). Le niveau d'authentification est choisi parmi les suivants : aucun, jeton, appel du serveur, etc. Le niveau de sécurité est choisi parmi les suivants : aucun, bas, élevé, chiffrement, etc.

Ainsi pour chaque moyen de communication, l'utilisateur pourra définir sur l'application ACOMI le niveau d'authentification minimum souhaité et la sécurité minimale souhaitée, par sélection d'une icône affichée sur l'écran correspondant à chacune des possibilités offertes pour chaque sous menu, puis mémorisation d'un triplet. Une fois cette opération réalisée à la configuration de l'application ACOMI ou ultérieurement lors d'une modification de configuration, l'application mémorisera des triplets (moyen de communication, niveau d'authentification, niveau de sécurité) et l'application utilisera ces informations pour établir la communication, par le moyen de communication disponible localement, et en appliquant à celui ci les exigences de sécurité et d'authentification acceptées par l'utilisateur. On comprend ainsi que le système offre une grande flexibilité dans le choix des moyens de communication et dans la sécurité appliquée. Le menu de l'application ACOMI comporte en plus des options réseau, authentification, sécurité, une option appairage qui lors de la sélection de cette option par l'utilisateur lui permet de choisir dans le sous-menu une ou plusieurs option(s) parmi les options d'appairage suivantes : NFC, Bluetooth, WIFI, QR code, voix, code, et à chaque option de communication d'y associer des fonctionnalités de sécurité en descendant dans le menu authentification ou sécurité. Là encore, l'application mémorisera les doublets ou triplets choisis et avant chaque appairage ira rechercher dans la mémoire les règles à appliquer pour l'opération.

Lorsque l'utilisateur sélectionne sur l'écran les moyens de communication utilisables pour l'application client ACOMI (2), celle-ci génère en mémoire un fichier classifiant les moyens de communication par un ordre de priorité défini par l'application client, l'application serveur ou l'utilisateur lui-même. Une fois cette opération effectuée, lorsque l'application client ACOMI (2) doit établir une connexion, celle-ci est établie en fonction des moyens de communication disponibles et de leur priorité. De même, lorsque l'utilisateur définit les niveaux de sécurité et d'authentification, l'application client ACOMI (2) génère en mémoire un fichier classifiant les niveaux de sécurité et d'authentification en fonction des moyens de communication disponibles, afin de mettre en place une connexion selon les volontés de l'utilisateur, tout en restant flexible à l'environnement de l'utilisateur.

Ladite application client ACOMI (2) est adaptée à recueillir des informations ou données contextuelles fournies par différents capteurs de l'OMI afin de former un contexte C unique à une situation environnementale de l'utilisateur à un moment donné T.

Lors de la configuration de l'application ACOMI ou automatiquement lors de l'installation, cette application pourra définir un ensemble d'informations constituant un contexte public transférable à un autre OMI, après avoir satisfait les conditions d'appairage.

Lors de la configuration c'est l'utilisateur qui sélectionnera dans une interface homme machine les informations devant être classifiées publiques et celles classifiées non publiques, pour les mémoriser dans deux mémoires différentes dont les règles d'utilisation sont définies différemment dans le programme de l'application ACOMI.

Les capteurs pouvant générer de telles données contextuelles peuvent être choisis au moins parmi les sources suivantes :
- des capteurs de mouvement tels qu'un accéléromètre, un gyromètre, un magnétomètre, un inclinomètre,
- des capteurs d'environnement tels qu'un capteur d'humidité, de température,
- des capteurs de proximité tels qu'un radar ou sonar,
- des capteurs de position tels que GPS/GALILEO, de géolocalisation, de géorepérage, de détection de la proximité d'un objet de WIFI, ou Bluetooth, ou Balise ou NFC ou RFID,
- des capteurs réseaux GSM, WIFI, LIFI, Bluetooth, balise, NFC, WLAN, PAN
- des capteurs de constantes biologiques telles que la fréquence cardiaque, la pression artérielle, l'oxymétrie,
- des capteurs de luminosité
- des capteurs de pression, tactiles ou physiques tels qu'une zone tactile, un clavier
- des capteurs d'imagerie tels qu'une caméra, un appareil photo
- des capteurs audio tels qu'un micro
- des capteurs temporels tels qu'une horloge, un calendrier
- tout autre capteur présent sur un OMI
- un mélange ou une extrapolation d'un ou de plusieurs de ces éléments ci-dessus ou de toutes autres informations reçues d'au moins un capteur

Le contexte C permet de définir précisément l'environnement de l'utilisateur et de servir à l'utilisation de règles élaborées en liaison avec chaque contexte différent pour proposer à l'utilisateur un certain nombre d'applications tierces pouvant lui être utiles. Cette suggestion résulte du croisement par un moteur adéquat entre le contexte C et un ensemble de règles R.

De préférence, le contexte C est constitué au minimum par des données relatives aux coordonnées de géolocalisation, à la présence de réseaux, à la date et à l'heure en combinaison avec des données en provenance d'au moins un capteur suivant :
- un capteur d'imagerie,
- un capteur audio,
- un capteur de pression,
- un capteur de constantes biologiques,
- un capteur de luminosité,
- un capteur de mouvement,
- un capteur environnemental,
- un capteur de proximité
ou au moins une appétence signalée par l'utilisateur, à l'aide par exemple d'un moyen de saisi sur l'OMI, ou par instruction vocal sur l'OMI. À titre d'exemple, il peut signaler qu'il a faim, froid, chaud, sommeil, un besoin biologique, etc.

En conséquence, les données contextuelles ne résultent pas uniquement de données de localisation, mais d'un ensemble de données qui comprend également les données issues du profil (et donc des goûts de l'utilisateur), ainsi celle provenant d'autres capteurs (d'imagerie, audio, de pression, de constantes biologiques, de luminosité, de mouvement, environnemental, de proximité) ou d'appétences signalées par l'utilisateur. De telles données permettent d'affiner la suggestion beaucoup plus finement que pourrait le faire une application utilisant seulement les données liées à la localisation de l'utilisateur. À titre d'exemple, si l'utilisateur précise dans son profil qu'il mange végétarien, l'application client ne suggèrera jamais un restaurant de viandes alors même que l'utilisateur passe plusieurs fois par semaine devant le restaurant de viandes à l'heure du déjeuner.

L'ensemble de règles R est composé d'au moins une application tierce à suggérer et des éléments de contexte, sélectionnés parmi toutes les informations de contextes disponibles, pour définir si oui ou non la suggestion devrait être déclenchée.

Dans un mode de réalisation, l'auteur/fournisseur d'une application tierce peut créer les règles R définissant un contexte C optimum pour l'utilisation de son application, et la proposer à l'AS avec l'application tierce elle-même. Ainsi, l'application tierce sera suggérée en fonction du contexte choisi par son auteur.

Dans un autre mode de réalisation, c'est l'utilisation par un utilisateur d'une application dans un contexte C donné qui va définir une nouvelle règle, ou affiner une règle existante dans l'ACOMI, puis dans l'AS.

Dans un mode de réalisation, l'ensemble de règles R est, de préférence, centralisé sur une base de données en ligne, en particulier dans l'application serveur AS (3) et mis à jour régulièrement sur l'application client ACOMI (2). Il y a alors une connexion entre l'application serveur AS (3) et l'application client ACOMI (2) sur lesquelles la suggestion sera affichée. Cette connexion est utilisée pour synchroniser les règles entre le serveur et le mobile de l'utilisateur. En outre, préférentiellement, selon l'emplacement ou le contexte C de l'utilisateur, le serveur peut envoyer un ensemble de règles précis susceptible de déclencher une suggestion évitant ainsi de déployer toutes les règles sur le mobile.

Dans un mode de réalisation, un profil P correspondant aux caractéristiques et préférences de l'utilisateur est ajouté à l'ensemble de règles R. Un tel profil peut être composé par au moins un des éléments suivants : âge, adresse, nationalité, sexe, ses goûts, sujets d'intérêt des applications tierces tels que « jeux, utilitaires, social, transport, bonnes affaires ».

Dans un mode de réalisation, l'application serveur AS (3) peut forcer l'application client ACOMI (2) à suggérer une application tierce qui ne correspond pas à un contexte C ou à un ensemble de règles R ou au profil P de l'utilisateur.

### Fonctionnement du système selon l'invention

Lorsque l'utilisateur se promène ou se déplace avec son OMI muni de l'application client ACOMI (2), l'application client ACOMI (2) recueille des données issues des différents capteurs de l'OMI afin de former un contexte environnemental C.

Au moyen d'un moteur approprié, le contexte C est comparé à un ensemble de règles R reçues préalablement depuis l'application serveur AS (3) et au profil P de l'utilisateur. Si le contexte C remplit les pré-requis des règles, l'application client ACOMI (2) notifie l'utilisateur sur son OMI qu'une application tierce pourrait lui être utile. L'utilisateur est alors en droit d'accepter ou de refuser la suggestion. S'il l'accepte, l'application client ACOMI (2) établit une connexion vers le serveur informatique afin de télécharger et d'installer puis lancer ladite application tierce. Par ailleurs, si l'application tierce est déjà présente sur OMI, l'application client ACOMI (2) déclenche le lancement de l'application tierce automatiquement ou après approbation de l'utilisateur.

De préférence, l'application client ACOMI (2) comprend un menu paramétrage (5) illustrée par la figure 1b, dans lequel l'utilisateur indique en sélectionnant sur l'écran de l'OMI le mode de connexion (5a) (GSM, WIFI, LIFI, Bluetooth, balise, NFC, WLAN, PAN) préféré ainsi que les niveaux d'authentification (5b) (aucun, jeton, appel serveur) et de sécurité (5c) (aucun, bas, haut, chiffrement) qu'il souhaite mettre en œuvre pour établir la connexion avec le serveur afin de télécharger et lancer l'application tierce.

Dans un mode de réalisation et de mise en œuvre lorsque le serveur AS est en communication à travers l'OMI avec l'application ACOMI il effectue les actions suivantes :
- Mise à jour générale de l'application ACOMI,
- Mise à jour de l'ensemble de règles R en fonction :
   ∘ des contextes C préalablement rencontrés afin de favoriser le déclenchement d'une suggestion d'application tierce. A titre d'exemple si l'utilisateur entre dans le métro et qu'aucune règle ne correspond à ce contexte précis, l'application serveur AS (3) met à jour l'ensemble des règles pour que l'application tierce associée au métro soit suggérée,
   ∘ de l'évolution du profil qui est modifié par l'utilisateur directement (changement de ses goûts) ou indirectement (âge).
- Mise à jour du profil P de l'application client ACOMI (2), suite à l'analyse statistique de l'utilisation de l'application client ACOMI (2).

Dans un mode de réalisation, lorsque la connexion entre l'application client ACOMI (2) sur le OMI de l'utilisateur (U1) et l'application serveur AS (3) sur le serveur distant est impossible, l'application client ACOMI (2) après avoir tenté une connexion sur chaque moyen de communication défini comme disponible par l'utilisateur et constaté l'échec de chaque tentative, met en œuvre un programme de recherche et de connexion (7) à un OMI d'un second utilisateur (U2) disposant de l'application client ACOMI (8) ou d'un serveur local (6)comme illustré par les figures 2 et 3.

Dans ce cas l'OMI de l'utilisateur (U1) se connecte à tous les OMI proches (8) ou à un serveur local (6) non connecté via internet, dont l'un au moins lui transmet la liste des applications disponibles et les règles associées. Après avoir trouvé sur un OMI proche (8) l'application qu'il recherche, l'OMI de premier utilisateur (U1) lance une procédure afin de s'apparier (7) et télécharger selon un protocole P2P ladite application tierce. Une telle connexion ou appariement peut se faire au moyen d'une connexion NFC, WIFI, Bluetooth, radio, IR, lecture d'un code QR, filaire (USB, Ethernet).

Dans un mode de réalisation, une balise ou « beacon » basée sur le SSID d'un WIFI, sur Bluetooth BLE ou sur un RFID, peut constituer à elle seule un contexte environnemental qui permet la suggestion et le téléchargement ainsi que le lancement d'une application tierce. A titre d'exemple purement illustratif et non réducteur, ce mode de réalisation est particulièrement préféré dans les commerces. En effet, l'application client ACOMI (2) détecte la balise et propose le téléchargement et le lancement de l'application tierce liée au commerce.

Dans un mode de réalisation, une première application client ACOMI1 (2) comprend un contexte C public adapté à être détecté par une seconde application ACOMI2 et pouvant déclencher une suggestion dans la seconde application ACOMI2 à la manière d'une balise ou « beacon ».

Dans un mode de réalisation alternatif, l'accord de l'utilisateur, pour télécharger et lancer l'application, n'est pas requis.

Dans un mode de réalisation alternatif, les applications tierces peuvent être remplacées par des notifications correspondant à des informations pouvant être utiles à l'utilisateur en fonction de son contexte C. A titre d'exemple purement illustratif et non limitant, de telles notifications peuvent être des promotions, de la publicité, des conseils d'achat, des informations relatives à une direction.

Dans un autre mode de réalisation, lorsque le présent contexte C, ne correspond pas à l'ensemble de règles R présentement utilisé par l'application client ACOMI (2), mais que le présent contexte C est identique à un ancien contexte C ayant abouti à la suggestion d'une application tierce, la dite application tierce est automatiquement suggérée sans changement préalable de l'ensemble de règles R.

Dans un autre mode de réalisation, l'ensemble des contextes C générés et les suggestions acceptées par l'utilisateur sont envoyés à l'application serveur AS (3), afin de les analyser pour obtenir des données statistiques permettant de formuler de nouveaux ensembles de règles correspondant mieux aux différents contextes environnementaux rencontrés usuellement par l'utilisateur.

Dans un autre mode de réalisation, si l'application tierce qui doit être suggérée (en fonction du contexte C, du profil P et des règles R), est déjà présente dans la mémoire de l'OMI et installée, l'application client ACOMI lance automatiquement ladite application.

Dans un autre mode de réalisation, l'application client ACOMI et/ou l'application serveur AS, analyse(nt) de manière anonyme l'acceptation des suggestions et/ou l'utilisation de l'application tierce suggérée, afin d'affiner les règles R et/ou de remonter de manière anonyme au développeur de l'application tierce que celle-ci ne correspond pas au besoin de l'utilisateur et ce malgré les données contextuelles qui suggère celle-ci. En d'autres termes, il y a une remontée d'informations anonymisées qui vient affiner l'ensemble de règles générales R fourni par les fournisseurs de l'application tierce.

On comprendra aisément à la lecture de la présente demande que les particularités de la présente invention, comme généralement décrites et illustrées dans les figures, puissent être arrangées et conçues selon une grande variété de configurations différentes. Ainsi, la description de la présente invention et les figures afférentes ne sont pas prévues pour limiter la portée de l'invention mais représentent simplement des modes de réalisation choisis.

L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, ils doivent être considérés à titre d'illustration et l'invention ne doit pas être limitée aux détails donnés ci-dessus.

## Revendications

1. Système (1) utilisant un serveur comprenant une application serveur AS (3) ayant au moins une base de données regroupant des applications tierces à suggérer et un agencement matériel et logiciel de communication pour télécharger automatiquement ou semi-automatiquement au moins une application sélectionnée dans la base de données vers un objet informatique communicant, mobile et intelligent, dit OMI, d'un premier utilisateur (U1), grâce à une application client ACOMI (2) installée sur cet OMI, en utilisant des règles évolutives ou modifiables R, pour les traiter par un moteur adéquat de l'application client ACOMI (2) et aboutir, par utilisation des données contextuelles issues d'au moins un capteur dudit OMI du premier utilisateur (U1), à une recommandation d'une application à télécharger, dite application recommandée, cette recommandation étant déterminée par l'utilisation d'informations contextuelles, les données contextuelles définissent un profil P et un contexte C, déclenchant de façon automatique ou semi-automatique le chargement à distance ou de proximité de ladite application recommandée, par utilisation d'une connexion avec un objet informatique distant en fonction des disponibilités des réseaux à proximité dudit OMI du premier utilisateur (U1) et des paramètres de connexion préférés préalablement enregistrés par ledit premier utilisateur (U1), soit dans ledit serveur, soit dans ledit OMI du premier utilisateur (U1) et/ou comprenant des paramètres définissant le niveau de sécurisation de la connexion,
et, lorsque la connexion avec ledit serveur est impossible, l'application client ACOMI (2), après avoir tenté une connexion sur chaque moyen de communication défini comme disponible par l'utilisateur et constaté l'échec de chaque tentative, met en œuvre un programme de recherche et de connexion (7) à un OMI d'un second utilisateur (U2) disposant de l'application client ACOMI (2) ou un serveur local (6), pour que ledit OMI de l'utilisateur (U1) se connecte à tous les OMI proches (8) ou audit serveur local (6) non connecté via internet, dont l'un au moins lui transmet la liste des applications disponibles et les règles associées, de sorte que, dans le cas où ladite application recommandée est trouvée sur un OMI proche (8), ledit OMI de l'utilisateur (U1) lance une procédure afin de s'apparier (7) et télécharger selon un protocole P2P ladite application recommandée,
le contexte C étant constitué au minimum par des données relatives aux coordonnées de géolocalisation, à la présence de réseaux, à la date et à l'heure en combinaison avec des données en provenance d'au moins un capteur suivant :
• un capteur d'imagerie,
• un capteur audio,
• un capteur de pression,
• un capteur de constantes biologiques,
• un capteur de luminosité,
• un capteur de mouvement,
• un capteur environnemental,
• un capteur de proximité
ou au moins une appétence signalée par l'utilisateur.

2. Système selon la revendication 1, **caractérisé en ce que** le traitement des informations de contexte envoyées par chaque objet informatique communicant, mobile, intelligent OMI permet l'élaboration de règles R évolutives ou modifiables, chaque règle permettant de contribuer à la recommandation d'une application à recommander parmi les applications de la base de données en fonction des données issues du contexte C.

3. Système selon la revendication 2, **caractérisé en ce que** l'élaboration s'effectue sur l'objet informatique communicant, mobile, intelligent OMI.

4. Système selon la revendication 2 ou 3, **caractérisé en ce que**, les règles de captation du contexte sont mises à jour dans l'application ACOMI du mobile à partir de l'application AS du serveur par envoi de messages et sont donc évolutives.

5. Système selon l'une des revendications précédentes, **caractérisé en ce que** l'élaboration s'effectue sur le serveur.

6. Système selon l'une des revendications 1 à 5, dans lequel en cas de choix, par l'utilisateur, du chargement automatique et après génération par l'objet informatique communicant, mobile, intelligent OMI de la suggestion, l'application client ACOMI (2) après avoir vérifié la condition envoie un message d'acceptation au serveur AS contenant l'application recommandée et le chargement est initialisé et effectué par le serveur.

7. Système selon l'une des revendications 1 à 5, **caractérisé en ce qu'**en cas de choix, par l'utilisateur, du chargement semi-automatique, après génération de la suggestion par l'objet informatique communicant, mobile, intelligent OMI, l'application client ACOMI (2) après lecture de la condition déroute son programme vers une séquence provoquant l'affichage d'une fenêtre, icône ou pavé demandant à l'utilisateur son accord pour le chargement, l'utilisateur sélectionne sur son objet informatique communicant, mobile, intelligent OMI une réponse au moyen d'une interface homme-machine, et l'application client ACOMI (2) de l'objet informatique communicant, mobile, intelligent OMI, en fonction de la réponse, génère le message adapté à la réponse pour l'envoyer au serveur AS contenant l'application recommandée et qui réagit en conformité avec la réponse en envoyant ou pas l'application suggérée au téléphone de l'utilisateur.

8. Système selon la revendication 6 ou 7, dans lequel l'application client ACOMI (2) comprend un mécanisme de paramétrage permettant à l'utilisateur, à la mise en route de l'application client ACOMI (2) ou en accédant au menu de l'application, de choisir et d'activer le réseau ou le type de communication utilisable pour communiquer avec le serveur ou un autre objet informatique communicant, mobile, intelligent OMI pour effectuer un croisement de données.

9. Système selon une des revendications 6 à 8, dans lequel l'application client ACOMI (2) comprend un mécanisme de paramétrage permettant à l'utilisateur, à la mise en route de l'application client ACOMI (2) ou en accédant au menu de l'application, de choisir le niveau de sécurité utilisable pour communiquer avec le serveur ou un autre objet informatique communicant, mobile, intelligent OMI pour effectuer un croisement de données.

10. Système selon une des revendications 6 à 9, dans lequel l'application client ACOMI (2) comprend un mécanisme de paramétrage permettant à l'utilisateur, à la mise en route de l'application client ACOMI (2) ou en accédant au menu de l'application, de choisir une condition de chargement automatique ou semi-automatique ou de croisement et sa mémorisation dans l'application.

11. Système selon une des revendications 6 à 10, dans lequel les informations collectées et constituant le contexte C sont issues de différentes sources telles que : soit au moins un capteur de mouvement, soit au moins un capteur d'environnement, soit au moins un sous-système réseau mobile, soit au moins un sous-système WLAN, soit au moins un sous-système PAN, soit au moins un sous-système LAN, soit au moins un des réseaux suivants un réseau GSM, WIFI, Bluetooth, NFC, radio, LIFI ou Ethernet, soit un mélange ou une extrapolation d'une ou de plusieurs de ces sources ci-dessus.

12. Système selon une des revendications 6 à 11, dans lequel le capteur d'environnement générant les informations collectées et constituant le contexte C est constitué au-moins par :
- des capteurs de mouvement tels qu'un accéléromètre, un gyromètre, un magnétomètre, un inclinomètre, et/ou
- des capteurs environnementaux tels qu'un capteur d'humidité, de température, et/ou
- des capteurs de proximité tels qu'un radar ou sonar, et/ou
- des capteurs de position tels que GPS/GALILEO, de géolocalisation, de géorepérage, de détection de la proximité d'un objet de WIFI, ou Bluetooth, ou Balise ou NFC ou RFID, et/ou
- des capteurs réseaux GSM, WIFI, LIFI, Bluetooth, balise, NFC, WLAN, PAN et/ou
- des capteurs de constantes biologiques telles que la fréquence cardiaque, la pression artérielle, l'oxymétrie, et/ou
- des capteurs de luminosité, et/ou
- des capteurs de pression, tactiles ou physiques tels qu'une zone tactile, un clavier, et/ou
- des capteurs d'imagerie tels qu'une caméra, un appareil photo, et/ou
- des capteurs audio tels qu'un micro, et/ou
- des capteurs temporels tels qu'une horloge, un calendrier, et/ou
- tout autre capteur présent sur un OMI, et/ou
- un mélange ou une extrapolation d'un ou de plusieurs des éléments ci-dessus ou de toute autre information reçue d'au moins un capteur.

13. Système selon une des revendications 6 à 8, dans lequel les informations collectées et constituant le contexte C sont associées à un Profil P contenant des données représentant les préférences de l'utilisateur, ou ses dominantes, ainsi qu'avec des données provenant d'autres sources de contexte telles que le calendrier ou des objets connectés.

14. Système selon une des revendications 6 à 13, dans lequel l'application client ACOMI (2) comporte un menu de paramétrage permettant à l'utilisateur de choisir un ou plusieurs types de catégories d'application ou un ou plusieurs types d'applications spécifiques qu'il accepte ou refuse en sélectionnant une réponse d'acceptation ou de refus dans l'affichage des catégories, pour au moins l'une des catégories suivantes, jeux, utilitaires, social, transport, bonnes affaires.

15. Système selon une des revendications 6 à 14, dans lequel le chargement ou le croisement mettent chacun en œuvre une procédure d'appairage, de sélection du type de connexion, d'authentification selon un niveau d'authentification déterminé par l'utilisateur lors du paramétrage et de transfert selon le niveau de sécurité choisi.

16. Système selon une des revendications 6 à 15, dans lequel, lorsque la réponse suite à un message envoyé au serveur n'est pas disponible, le module de communication établit une connexion avec un second objet informatique communicant, mobile, intelligent OMI2 local comprenant l'application Client et l'application tierce correspondant au contexte environnemental, afin de charger puis lancer ladite application tierce.

17. Système selon la revendication 12, dans lequel les informations collectées et constituant le contexte C sont associées à un identifiant unique créant une bijection entre le contexte et l'utilisateur ou le mobile.

## Patentansprüche

1. System (1), das einen Server verwendet, umfassend eine Serveranwendung AS (3) mit mindestens einer Datenbank, die vorzuschlagende Anwendungen von Drittanbietern zusammenfasst, und eine Hardware-Software-Kommunikationsanordnung zum automatischen oder halbautomatischen Herunterladen von mindestens einer Anwendung, die in der Datenbank ausgewählt wird, auf ein kommunizierendes, mobiles und intelligentes Datenverarbeitungsobjekt, OMI genannt, eines ersten Benutzers (U1) mittels einer Client-Anwendung ACOMI (2), die auf diesem OMI installiert ist, unter Verwendung von erweiterbaren oder modifizierbaren Regeln R, um diese durch eine passende Engine der Client-Anwendung ACOMI (2) zu verarbeiten und durch Verwendung von kontextuellen Daten, die von mindestens einem Sensor des OMI des ersten Benutzers (U1) stammen, eine Empfehlung einer herunterzuladenden Anwendung, empfohlene Anwendung genannt, herbeizuführen, wobei diese Empfehlung durch Verwendung von kontextuellen Informationen bestimmt wird, wobei die kontextuellen Daten, die ein Profil P und einen Kontext C definieren, automatisch oder halbautomatisch das Fern- oder Nahladen der empfohlenen Anwendung durch Verwendung einer Verbindung mit einem entfernten Datenverarbeitungsobjekt in Abhängigkeit von Verfügbarkeiten von Netzwerken in der Nähe des OMI des ersten Benutzers (U1) und bevorzugten Verbindungsparametern, die zuvor von dem ersten Benutzer (U1) gespeichert wurden, entweder auf dem Server oder auf dem OMI des ersten Benutzers (U1), und/oder Parameter umfassen, die das Sicherheitsniveau der Verbindung definieren, auslösen,
und, wenn die Verbindung mit dem Server unmöglich ist, die Client-Anwendung ACOMI (2), nachdem sie eine Verbindung mit jedem von dem Benutzer als verfügbar definierten Kommunikationsmittel versucht hat und das Misslingen jedes Versuchs festgestellt hat, ein Programm (7) zum Suchen und Verbinden mit einem OMI eines zweiten Benutzers (U2), das über die Client-Anwendung ACOMI (2) oder einen lokalen Server (6) verfügt, durchführt, damit das OMI des Benutzers (U1) sich mit allen nahen OMI (8) oder mit dem lokalen Server (6), der nicht über das Internet verbunden ist, verbindet, von denen mindestens eines die Liste von verfügbaren Anwendungen und die assoziierten Regeln an diese überträgt, so dass in dem Fall, in dem die empfohlene Anwendung auf einem nahen OMI (8) gefunden wird, das OMI des Benutzers (U1) einen Vorgang startet, damit die empfohlene Anwendung sich zuordnet und gemäß einem Protokoll P2P heruntergeladen wird,
wobei der Kontext C aus mindestens Daten in Bezug auf Geolokalisierungskoordinaten, das Vorliegen von Netzwerken, das Datum und die Uhrzeit in Kombination mit Daten, welche von mindestens einem der folgenden Sensoren stammen:
• einem Bildgebungssensor,
• einem Audiosensor,
• einem Drucksensor,
• einem Sensor für biologische Konstanten,
• einem Helligkeitssensor,
• einem Bewegungssensor,
• einem Umgebungssensor,
• einem Näherungssensor
oder mindestens einem Request, der von dem Benutzer angegeben wird, besteht.

2. System nach Anspruch 1, **dadurch gekennzeichnet, dass** die Verarbeitung von Kontextinformationen, die von jedem kommunizierenden, mobilen, intelligenten Datenverarbeitungsobjekt OMI gesendet werden, die Erstellung von erweiterbaren oder modifizierbaren Regeln R ermöglicht, wobei jede Regel ermöglicht, zu der Empfehlung einer zu empfehlenden Anwendung aus den Anwendungen der Datenbank in Abhängigkeit von Daten, die von dem Kontext C stammen, beizutragen.

3. System nach Anspruch 2, **dadurch gekennzeichnet, dass** die Erstellung an dem kommunizierenden, mobilen, intelligenten Datenverarbeitungsobjekt OMI erfolgt.

4. System nach Anspruch 2 oder 3, **dadurch gekennzeichnet, dass** die Regeln zur Erfassung des Kontexts in der Anwendung ACOMI des Mobilgeräts von der Anwendung AS des Servers durch Senden von Nachrichten aktualisiert und daher erweiterbar sind.

5. System nach einem der vorhergehenden Ansprüche, **dadurch gekennzeichnet, dass** die Erstellung auf dem Server erfolgt.

6. System nach einem der Ansprüche 1 bis 5, wobei im Fall einer Wahl des automatischen Ladens durch den Benutzer und nach Erzeugung des Vorschlags durch das kommunizierende, mobile, intelligente Datenverarbeitungsobjekt OMI die Client-Anwendung ACOMI (2), nachdem die Bedingung verifiziert wurde, eine Akzeptanznachricht an den Server AS sendet, der die empfohlene Anwendung enthält, und das Laden durch den Server initialisiert und durchgeführt wird.

7. System nach einem der Ansprüche 1 bis 5, **dadurch gekennzeichnet, dass** im Fall einer Wahl des halbautomatischen Ladens durch den Benutzer nach Erzeugung des Vorschlags durch das kommunizierende, mobile, intelligente Datenverarbeitungsobjekt OMI die Client-Anwendung ACOMI (2) nach Lesen der Bedingung sein Programm zu einer Sequenz umleitet, die die Anzeige eines Fensters, Symbols oder Felds herbeiführt, das von dem Benutzer seine Zustimmung zu dem Laden anfordert, der Benutzer auf seinem kommunizierenden, mobilen, intelligenten Datenverarbeitungsobjekt OMI eine Antwort mittels einer Mensch-Maschine-Schnittstelle auswählt und die Client-Anwendung ACOMI (2) des kommunizierenden, mobilen, intelligenten Datenverarbeitungsobjekts OMI in Abhängigkeit von der Antwort die Nachricht erzeugt, die auf die Antwort abgestimmt ist, um diese an den Server AS zu senden, der die empfohlene Anwendung enthält und der in Übereinstimmung mit der Antwort durch Senden oder nicht Senden der vorgeschlagenen Anwendung an das Telefon des Benutzers reagiert.

8. System nach Anspruch 6 oder 7, wobei die Client-Anwendung ACOMI (2) einen Parametrisierungsmechanismus umfasst, der dem Benutzer bei Initiieren der Client-Anwendung ACOMI (2) oder durch Zugreifen auf das Menü der Anwendung ermöglicht, das Netzwerk oder den verwendbaren Kommunikationstyp zum Kommunizieren mit dem Server oder einem anderen kommunizierenden, mobilen, intelligenten Datenverarbeitungsobjekt OMI auszuwählen oder zu aktivieren, um einen Datenabgleich zu bewirken.

9. System nach einem der Ansprüche 6 bis 8, wobei die Client-Anwendung ACOMI (2) einen Parametrisierungsmechanismus umfasst, der dem Benutzer bei Initiieren der Client-Anwendung ACOMI (2) oder durch Zugreifen auf das Menü der Anwendung ermöglicht, das verwendbare Sicherheitsniveau zum Kommunizieren mit dem Server oder einem anderen kommunizierenden, mobilen, intelligenten Datenverarbeitungsobjekt OMI auszuwählen, um einen Datenabgleich zu bewirken.

10. System nach einem der Ansprüche 6 bis 9, wobei die Client-Anwendung ACOMI (2) einen Parametrisierungsmechanismus umfasst, der dem Benutzer bei Initiieren der Client-Anwendung ACOMI (2) oder durch Zugreifen auf das Menü der Anwendung ermöglicht, eine Bedingung eines automatischen oder halbautomatischen Ladens oder eines Abgleichs und seiner Speicherung in der Anwendung auszuwählen.

11. System nach einem der Ansprüche 6 bis 10, wobei die Informationen, die gesammelt werden und den Kontext C bilden, von unterschiedlichen Quellen stammen, wie: entweder mindestens einem Bewegungssensor oder mindestens einem Umgebungssensor oder mindestens einem Mobilnetzwerk-Subsystem oder mindestens einem WLAN-Subsystem oder mindestens einem PAN-Subsystem oder mindestens einem LAN-Subsystem oder mindestens einem der folgenden Netzwerke: einem GSM-Netzwerk, WIFI, Bluetooth, NFC, Funk, LIFI oder Ethernet, oder einer Mischung oder einer Extrapolation von einer oder mehreren dieser obigen Quellen.

12. System nach einem der Ansprüche 6 bis 11, wobei der Umgebungssensor, der die gesammelten Informationen generiert und den Kontext C bildet, gebildet wird von mindestens:
- Bewegungssensoren, wie einem Beschleunigungsmesser, einem Gyrometer, einem Magnetometer, einem Neigungsmesser, und/oder
- Umgebungssensoren, wie einem Feuchtigkeits-, Temperatursensor, und/oder
- Näherungssensoren, wie einem Radar oder Sonar, und/oder
- Positionssensoren, wie GPS/GALILEO, Geolokalisierungs-, Geofencing-Sensoren, Sensoren zur Erfassung der Nähe eines Objekts zu WIFI, oder Bluetooth- oder Balise- oder NFC- oder RFID-, und/oder
- GSM-, WIFI-, LIFI-, Bluetooth-, Balise-, NFC-, WLAN-, PAN-Netzwerk-Sensoren, und/oder
- Sensoren für biologische Konstanten, wie der Herzfrequenz, der arterielle Blutdruck, die Oxymetrie, und/oder
- Helligkeitssensoren und/oder
- Drucksensoren, taktile oder physikalische, wie eine Berührungszone, eine Tastatur, und/oder
- Bildgebungssensoren, wie eine Kamera, ein Fotoapparat, und/oder
- Audiosensoren, wie ein Mikrofon, und/oder
- Zeitsensoren, wie eine Uhr, ein Terminkalender, und/oder
- einem beliebigen anderen Sensor, der an dem OMI vorliegt, und/oder
- einer Mischung oder einer Extrapolation von einem oder mehreren der obigen Elemente oder einer beliebigen anderen Information, die von mindestens einem Sensor empfangen wird.

13. System nach einem der Ansprüche 6 bis 8, wobei die Informationen, die gesammelt werden und den Kontext C bilden, mit einem Profil P assoziiert sind, das Daten, die die Präferenzen des Benutzers oder seine dominierenden Merkmale darstellen, sowie Daten, die von anderen Kontextquellen hervorgehen, wie dem Terminkalender oder verbundenen Objekten, enthält.

14. System nach einem der Ansprüche 6 bis 13, wobei die Client-Anwendung ACOMI (2) ein Parametrisierungsmenü umfasst, das dem Benutzer ermöglicht, einen oder mehrere Typen von Anwendungskategorien oder einen oder mehrere Typen von spezifischen Anwendungen auszuwählen, die er durch Auswählen einer Akzeptanz- oder Ablehnungsantwort in der Anzeige von Kategorien akzeptiert oder ablehnt, für mindestens eine der folgenden Kategorien: Spiele, Nutzprogramme, Soziales, Transport, gute Angebote.

15. System nach einem der Ansprüche 6 bis 14, wobei das Laden oder der Abgleich jeweils einen Vorgang eines Zuordnens, eines Auswählens des Verbindungstyps, eines Authentifizierens gemäß einem Authentifizierungsniveau, das von dem Benutzer während der Parametrisierung bestimmt wird, und eines Transfers gemäß dem gewählten Sicherheitsniveau durchführt.

16. System nach einem der Ansprüche 6 bis 15, wobei, wenn die Antwort, die auf eine Nachricht folgt, die an den Server gesendet wird, nicht verfügbar ist, das Kommunikationsmodul eine Verbindung zu einem lokalen zweiten kommunizierenden, mobilen, intelligenten Datenverarbeitungsobjekt OMI2 herstellt, das die Client-Anwendung und die Anwendung von einem Drittanbieter, die dem Umgebungskontext entspricht, umfasst, um die Anwendung von dem Drittanbieter zu laden und dann zu starten.

17. System nach Anspruch 12, wobei die Informationen, die gesammelt werden und den Kontext C bilden, mit einer einzigartigen Kennung assoziiert sind, die eine bijektive Abbildung zwischen dem Kontext und dem Benutzer oder dem Mobilgerät erzeugt.

## Claims

1. System (1) using a server including a server application SA (3) having at least one database that combines third-party applications to be suggested and a hardware and software communications arrangement for automatically or semiautomatically downloading at least one application selected from the database to an intelligent moving communicating data-processing object, called an IMO, of a first user (U1), owing to a client application IMOCA (2) installed on this IMO, using scalable or modifiable rules R, for processing them by a suitable driver of the client application IMOCA (2) and arriving, by use of the contextual data from at least one sensor of said IMO of the first user (U1), at a recommendation of an application to be downloaded, the so-called recommended application, this recommendation being determined by the use of contextual information, the contextual data defining a profile P and a context C, automatically or semiautomatically causing remote loading or proximity loading of said recommended application, by use of a connection to a distant data-processing object as a function of availability of the proximity networks of said IMO of the first user (U1) and the preferred connection parameters previously registered by said first user (U1),either in said server, or in said IMO of the first user (U1),and/or including parameters that define the security level of the connection,
and, when connection to said server is impossible, the client application IMOCA (2), after attempting a connection on each means of communication defined as being available by the user and establishing the failure of each attempt, implements a search and connect program (7) for connection to an object of a second user (U2) having the client application (2) or a local server (6), so that said IMO of the user (U1) is connected to all nearby IMOs (8) or to said local server (6) not connected via the internet, at least one of which transmits to him the list of available applications and the associated rules, so that, in the event that said recommended application is found on a nearby IMO (8), said IMO of the user (U1) starts a procedure in order to pair up (7) and download said recommended application according to a P2P protocol, the context C consisting at the minimum of data relating to geolocation coordinates, the presence of networks and the date and time in combination with data from at least one of the following sensors:
- an imagery sensor,
- an audio sensor,
- a pressure sensor,
- a sensor of biological constants,
- a luminosity sensor,
- a movement sensor,
- an environmental sensor,
- a proximity sensor
or at least one appetence signalled by the user.

2. System according to claim 1, **characterised in that** processing of the context information sent by each intelligent moving communicating data-processing object IMO allows scalable or modifiable rules R to be drawn up, each rule making it possible to contribute to the recommendation of an application to be recommended from among the applications of the database as a function of the data originating from the context C.

3. System according to claim 2, **characterised in that** the rules are drawn up on the intelligent moving communicating data-processing object IMO.

4. System according to claim 2 or 3, **characterised in that** the rules of context sensing are updated in the application IMOCA of the mobile on the basis of the server application SA by sending messages and are therefore scalable.

5. System according to one of the preceding claims, **characterised in that** the rules are drawn up on the server.

6. System according to one of claims 1 to 5, in which, in case of choice, by the user, of automatic loading and after generation of the suggestion by the intelligent moving communicating data-processing object IMO, after verifying the condition the client application IMOCA (2) sends a message of acceptance to the server SA containing the recommended application, and loading is initialised and carried out by the server.

7. System according to one of claims 1 to 5, **characterised in that**, in case of choice, by the user, of semiautomatic loading, after generation of the suggestion by the intelligent moving communicating data-processing object IMO, after reading the condition the client application IMOCA (2) reroutes its program towards a sequence that causes display of a window, icon or keypad asking the user for his consent to loading, the user selects a reply on his intelligent moving communicating data-processing object IMO by means of a man-machine interface, and as a function of the reply the client application IMOCA (2) of the intelligent moving communicating data-processing object IMO generates the message adapted to the reply in order to send it to the server SA containing the recommended application, which reacts in accordance with the reply by sending or not sending the suggested application to the user's telephone.

8. System according to claim 6 or 7, in which the client application IMOCA (2) includes a configuration mechanism allowing the user, on starting up the client application IMOCA (2) or on accessing the application menu, to choose and activate the network or the type of communication that can be used to communicate with the server or another intelligent moving communicating data-processing object IMO in order to carry out exchange of data.

9. System according to one of claims 6 to 8, in which the client application IMOCA (2) includes a configuration mechanism allowing the user, on starting up the client application IMOCA (2) or on accessing the application menu, to choose the security level that can be used to communicate with the server or another intelligent moving communicating data-processing object in order to carry out exchange of data.

10. System according to one of claims 6 to 9, in which the client application IMOCA (2) includes a configuration mechanism allowing the user, on starting up the client application IMOCA (2) or on accessing the application menu, to choose a condition of automatic or semiautomatic loading or exchange and storage thereof in the application.

11. System according to one of claims 6 to 10, in which the collected information constituting the context C comes from different sources such as: either at least one movement sensor, or at least one environment sensor, or at least one mobile network subsystem, or at least one WLAN subsystem, or at least one PAN subsystem, or at least one LAN subsystem, or at least one of the following networks: a GSM network, Wi-Fi, Bluetooth, NFC, radio, Li-Fi or Ethernet, or a mixture or extrapolation of one or more of the above sources.

12. System according to one of claims 6 to 11, in which the environment sensor generating the collected information constituting the context C consists of at least:
- movement sensors such as an accelerometer, a gyrometer, a magnetometer, an inclinometer, and/or
- environmental sensors such as a humidity or temperature sensor, and/or
- proximity sensors such as radar or sonar, and/or
- position sensors such as GPS/Galileo, for geolocation, geotracking, detection of the proximity of a Wi-Fi object, or Bluetooth, or balise or NFC or RFID, and/or
- GSM, Wi-Fi, Li-Fi, Bluetooth, balise, NFC, WLAN or PAN network sensors and/or
- sensors of biological constants such as heart rate, blood pressure, oximetry, and/or
- luminosity sensors, and/or
- tactile or physical pressure sensors such as a tactile zone, keyboard, and/or
- imagery sensors such as a film camera or ordinary camera, and/or
- audio sensors such as a microphone, and/or
- time sensors such as a clock, calendar, and/or
- any other sensor present on an IMO, and/or
- a mixture or extrapolation of one or more of the above elements or of any other information received from at least one sensor.

13. System according to one of claims 6 to 8, in which the collected information constituting the context C is associated with a profile P containing data representing the user's preferences, or his dominant features, as well as with data from other context sources such as the calendar or connected objects.

14. System according to one of claims 6 to 13, in which the client application IMOCA (2) comprises a configuration menu allowing the user to choose one or more types of application categories or one or more types of specific applications that he accepts or refuses by selecting an accept or refuse reply in the display of categories, for at least one of the following categories: games, utility, social, transport, good deals.

15. System according to one of claims 6 to 14, in which loading or exchange each implement a procedure of pairing, selection of the type of connection, authentication according to a level of authentication determined by the user during configuration, and transfer according to the security level chosen.

16. System according to one of claims 6 to 15, in which, when the reply following a message sent to the server is not available, the communication module establishes a connection to a second local intelligent moving communicating data-processing object OMI2 including the client application (2) and the third-party application corresponding to the environmental context, in order to load and then start up said third-party application.

17. System according to claim 12, in which the collected information constituting the context C is associated with a unique identifier that creates a bijection between the context and the user or the mobile.
